(19) Europäisches Patentamt / European Patent Office / Office européen des brevets

(11) **EP 2 002 035 B1**

(12) **EUROPEAN PATENT SPECIFICATION**

(45) Date of publication and mention
of the grant of the patent:
**14.02.2018 Bulletin 2018/07**

(21) Application number: **07752291.0**

(22) Date of filing: **06.03.2007**

(51) Int Cl.:
*C25D 11/02* (2006.01)   *C25D 21/12* (2006.01)
*G01B 11/06* (2006.01)   *G01B 15/02* (2006.01)
*G01B 17/02* (2006.01)

(86) International application number:
**PCT/US2007/005577**

(87) International publication number:
**WO 2007/103304 (13.09.2007 Gazette 2007/37)**

(54) **A MOBILE APPARATUS CAPABLE OF SURFACE MEASUREMENTS OF A COATING THICKNESS**

MOBILES GERÄT ZUR OBERFLÄCEHNMESSUNG VON BESCHICHTUNGSDICKEN

APPAREIL MOBILE PERMETTANT DES MESURES DE SURFACE

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(30) Priority: **07.03.2006 US 780103 P**

(43) Date of publication of application:
**17.12.2008 Bulletin 2008/51**

(73) Proprietor: **Sensory Analytics
Greensboro, NC 27407 (US)**

(72) Inventors:
• **PRICE, Joseph K.
Nebo, North Carolina 28761 (US)**
• **PAVELKA, Jeff
Pinetops, North Carolina 27864 (US)**

(74) Representative: **Dunleavy, Christopher Squire
Venner Shipley LLP
Byron House
Cambridge Business Park
Cowley Road
Cambridge CB4 0WZ (GB)**

(56) References cited:
WO-A-2006/074412    US-A- 4 190 770
US-A- 4 883 576    US-A- 4 883 578
US-A- 5 481 631    US-A- 5 851 373
US-A- 6 128 081    US-A1- 2002 149 360
US-A1- 2004 155 190    US-B1- 6 387 184
US-B2- 6 674 533

**Description**

**Field of the Invention**

The present invention relates generally to a mobile apparatus and/or system that measures the thickness of a surface on at least a part of a substrate and methods of using said apparatus and/or system. The mobile apparatus and/or system in one embodiment includes anodizing systems having a coating thickness monitor and, optionally, has a system for regulating an anodized coating thickness on a substrate as it is being formed as well as measuring the coating thickness during and/or subsequent to its formation. In an embodiment, the mobile apparatus and/or system is also a portable apparatus and/or system.

**Background of the invention**

Coatings of substrates with different surfaces are known. For example, applying anodized coatings on metal substrates such as aluminum, titanium, niobium, tantalum, tungsten, zirconium and zinc are known. Metal oxycarbides such as chromium, molybdenum or tungsten oxycarbide are materials that can be used for hard surface coating. Other coatings are used on a plurality of substrates, such as polymers on a plurality of substrates (e.g., a polyisocyanate or an isocyanate functional polyurethane prepolymer mixed with a polyol can form a polymer to be applied on a substrate), different nitride and carbide compositions on semiconductors, hexavalent chromium films or coatings (also referred to as chromate) on metals, other top coats or primers which may be placed on metallic substrates to inhibit or help prevent corrosion, ammoniacal silver nitrate treatments on glass to form mirrors, paints on a plurality of substrates for example electrocoating on any of a plurality of substrates, thermosetting fluorine-containing resin powder coating compositions can be applied to metallic substrates for protection, silica-based coating films can be applied to a plurality of substrates, and anodized surfaces can be created on metals.

Anodizing is done for practical and aesthetic reasons. From a practical perspective, the creation of a coating on the surface of a metallic substrate contributes to an anodized product's wear resistance, corrosion resistance, and oxidation resistance. From an aesthetic perspective, the creation of a coating including a dye for coloration on the surface of a metallic substrate contributes to an anodized product's consumer appeal. In both industrial and aesthetic applications, it is desirable to control the thickness of the anodized coating as well as the consistency over a given surface area.

In the military, aerospace, telecommunications, medical, industrial and automotive industries, it is common to use anodized metal. Anodized aluminum is useful to prevent corrosion and or rust in salt and/or corrosive atmospheres. Accordingly, by anodizing the metals used in airplanes and cars in the aerospace and automotive industries and stents or other metallic objects in the medical industries, better, longer lasting products can be generated. More recently, manufacturers have been able to offer hard anodization in various colors by incorporating dyes or other color providing chemicals into the anodization process. Common color hues include black, blue, red and green and other colors.

Many of these industries suffer the drawback of not being able to efficiently and accurately measure the anodized surfaces. With an inability to efficiently and accurately measure anodized surfaces, some industries have had to resort to anodizing surfaces with a thick anodized coat (in order to ensure that the entire surface is anodized). This adds weight to the substrates that are anodized. In all the above mentioned industries, there are disadvantages to having a thick anodized coat. For example, in the aerospace and automotive industries, this may add considerable weight to the substrate being anodized. This will result in decreased fuel efficiency in products made in both industries. In the smaller plane aerospace industry, the added weight may make the planes more dangerous and allow the planes to carry less cargo or passenger weight (because the plane itself is heavier).

If a thinner anodization coat is used, an inability to measure accurately at a plurality of sample points may lead to uneven coating wherein portions of the substrate have a very thin anodized coat. If these thin portions undergo some physical stress that results in the removal of this thin coat, there is the possibility that corrosion or rust may occur with the underlying substrate, resulting in an inferior product with a shorter lifetime and potentially a dangerous product. Thus, it is desirable to be able to accurately and efficiently measure surface coat thicknesses at a plurality of locations on a substrate (for example, with anodized coatings).

Commonly, coating thickness measurements are determined by destructive methods. For example, in a batch anodizing system, control coupons made of the same material as a product to be anodized are included in the anodizing bath. At intermediate times during the anodizing process a control coupon is removed from the bath and destroyed in a manner that permits determining the coating thickness.

One destructive method includes mounting a control coupon in a Bakelite cross-section, polishing the mounted coupon to a mirror finish and examining the polished cross-section using an optical microscope to determine the coating thickness. A second destructive method includes cutting or breaking a control coupon to expose a cross-section and examining the cross-section using scanning electron microscopy to determine the coating thickness. These destructive methods are cumbersome in production.

Both destructive methods delay production because of the time taken to remove and prepare control coupons for determining coating thickness. During the delay, the bath that is used for anodization is idle. An alternative is to remove the product from the anodizing bath while determining a coating thickness and replace it with a second product and corresponding control coupons. In this case, storage area for the product removed from the bath during a coating thickness determination would be required at the production site.

Although using an anodizing bath alternatively with multiple products provides a solution to production delay, coating flaws can be introduced by bath chemistry changes and surface contagion during storage. That is, the different bath chemistry when the product is reintroduced after the coating thickness determination for further anodizing may create a distinct mismatched interface with the original coating.

During storage, the original coating on the product may also be damaged during removal from and replacement into the anodizing bath. Particulate matter such as dust also may attach to the surface to introduce further interfacial flaws between the original coating and the further coating. This dust may add to frictional contacts with the atmosphere presenting a plurality of problems.

The above destructive methods have other serious flaws. For example, one flaw is that the determined coating thickness is that of a control coupon and not of the product. Thus, the coating thickness of the product is only an estimate and the coating thickness consistency over the entire surface of the product is unknown. Because the above enumerated systems describe destructive sample preparation, there is no need in these systems to have an apparatus and/or system that is able to move from a place where one sample may be sampled to another location where another sample may be sampled for its thickness. Accordingly, if one were to employ a non-destructive means of sampling surface thicknesses, it would be advantageous to have an apparatus and/or system that is mobile so that sampling can take place at a plurality of locations.

From the above description, it should be apparent that there remains need for new and improved apparatus, methods, and/or systems that nondestructively determine the coating thickness on one or more products, wherein the apparatus, methods, and/or systems employ a mobile apparatus and/or system for sampling at a plurality of locations.

US Patent No. 6,674,533 describes implementing an optical monitor for measuring surface thicknesses within a bath using a probe. In US Patent No. 6,674,533 the probe is positioned during an anodization process during in situ measurements. The aluminum substrate is also positioned during the anodization bath to ensure proper anodization. US2004/0155190 concerns a portable system for measuring amount of coating on a substrate, using a hand-held measuring unit which is held in a base for data upload/download when not in use. US612081 discloses an ultrasonics-based film thickness measurement system and method, which uses separate pulsed and substantially continuous laser light sources. US5481631 concerns an optical switch for a photometric instrument, such as for a spectrophotometer. US2002/0149360 relates to a method of measuring a thin film metal coating on wafer products by using eddy current technologies. US4190770 discloses a backscatter probe mounted in a measurement wheel so as to travel at the same tangential speed as an adjacent coated web.. US6387184 relates to a system and method for modularly interfacing wet components of a coating apparatus to a coating base station at which a flat panel display substrate is located. The wet components are housed in a fluid cart interchangeable with similar fluid carts at the base station and optionally in wireless communication with the base station. US4883578 concerns a high speed electro-coating apparatus for cans. The apparatus has a rotary turntable with a number of cells into which respective cans are placed. The cells are filled with electro-coating fluid and fed with a predetermined quantity of electrical charge.

## Brief summary of the invention

The present invention relates to a mobile apparatus for measuring thickness of a coating on a surface of a substrate as defined in claim 1. The present invention correspondingly provides a method for measuring a thickness of a coated substrate, as defined in claim 7.

## Brief description of the several views of the drawings

Figure 1 shows an exemplary embodiment of the present invention which is an apparatus and/or system comprising a rack controller having a wireless communication link, an optical switching system, probes, contacts, and electronic switches.

Figure 2 shows an exemplary embodiment of a probe of the instant invention.

Figure 3 shows a cross-sectional image of a can stock.

Figure 4 shows a schematic illustration of a probe tip while measuring a cross sectional area of a surface.

Figure 5 shows interference spectra of a 1 $\mu$m and a 2 $\mu$m layer.

Figure 6 shows the principal that is used to determine a surface thickness using an interference model of a light reflection at two surfaces.

Figure 7 shows a block diagram of the schematic operation of the present invention.

Figure 8 shows an autonomous two-sided Thickness Gauging System wherein multiple probes may be used to determine thicknesses on either of two sides of a substrate to be measured.

Figure 9 shows a perspective view of a probe tip transmitting light to a surface and measuring a surface thickness.

Figure 10 shows another view of light being transmitted from a probe to a surface on a substrate and the light's refraction and reflection.

Figure 11 shows a composite reflectance spectrum of a coherent signal of light that is deconvoluted to ultimately give a surface thickness measurement.

## Detailed description of the invention

The present invention relates to a mobile apparatus and/or system that measures the thickness at one or more locations of a surface on at least a part of a substrate and methods of using said apparatus and/or system. The present invention may also have the means of applying a surface on a substrate concurrently or substantially concurrently with the measuring process. According to the invention, the mobile apparatus and/or system includes anodizing systems having a coating thickness monitor and, has a system for applying and regulating an anodized coating on a substrate as it is being formed. The apparatus and system has the ability to measure coating thickness prior to, concurrently with, and/or subsequent to the coating's formation.

In one embodiment, the mobile apparatus and/or systems of the present invention is a transportable (or portable) measuring system that is attached either permanently or temporarily to an anodizing rack. In this embodiment, the measuring system employs one or more probes, which may be made of one or more fiber optic probes that are positioned at one or a plurality of locations along a rack during the time the rack is loaded. In one embodiment, this plurality of locations may be fixed, or alternatively, an operator of the apparatus and/or system may choose where to locate the one or more probes prior to or during the measurement process.

In an embodiment, the probes of the instant invention can tolerate the transmission of a wide variety of sectors of the electromagnetic spectrum so that the one or a plurality of probes are able to transmit and receive wavelengths from very short wavelengths (i.e., in the short ultraviolet range) to very long wavelengths (i.e., in the short radio wave region). In an alternate embodiment, the one or plurality of probes are interchangeable and/or detachable so that one probe can be removed from the optical fiber connections and another probe can be inserted in its place. The interchange of probes is done, for example, if one probe is designed for transmission and reception of wavelengths in one region of the electromagnetic spectrum and a second different probe is designed and optimized for transmission and reception of wavelengths in another region of the electromagnetic spectrum. The one and/or a plurality of detachable probes may all have different resistance values, may have different tip sizes, and may be designed in a way so that probe removal and insertion is facile. For example, the probes may be designed so that they snap into place with connectors to a processing apparatus.

The one or a plurality of probes of the present invention may be of many types. In an embodiment, the probe may be small tipped, which facilitates high-resolution measurements through focused optics. Alternatively, the probe may have a larger tip that allows one to integrate a larger surface area measurement. In an embodiment, these tips may be interchangeable so that a probe can accommodate various tips (i.e., a large tip and a small tip).

The present invention relates to a transportable (or portable) measuring system that can measure an anodized surface on a substrate. The present application can be used to measure any of a plurality of different surfaces on a substrate and may employ any of a plurality of methods of being able to measure the thicknesses of these surfaces at any of a plurality of locations on the substrate. Accordingly, although much of the following describes measurement of surfaces on substrates with respect to anodized surfaces on a substrate, it should be understood that other surfaces on substrates are contemplated. For example, surfaces that can be measured on any of a plurality of substrates include but are not limited to oxycarbides (i.e., hard surface coatings) such as chromium, molybdenum or tungsten oxycarbides on any of a plurality of substrates, polymers on a plurality of substrates (e.g., a polyisocyanate or an isocyanate functional polyurethane prepolymer mixed with a polyol can form a polymer to be applied on a substrate), different nitride and carbide compositions on semiconductors, hexavalent chromium films or coatings (also referred to as chromate) on metals, other top coats or primers on metallic substrates, ammoniacal silver nitrate treatments on glass (mirrors), paints on a plurality of substrates, thermosetting fluorine-containing resin powder coating compositions on metallic substrates, silica-based coating films on any of a plurality of substrates, organic or inorganic polymers on a plurality of substrates, electronic coating (i.e., e-coating) on any of a plurality of susbstrates, powder coatings on any of a plurality of substrates, and anodized surfaces on metals.

Possible substrates (containing a coating that can be measured) include but are not limited to wood, artificial and/or synthetic woods, metals, ceramics, polymers, composites, alloys, glasses, laminates, fibers, adhesives, plastics, screen wires, semiconductors substrates, rubbers, and the like. Examples of the above substrates and/or surfaces on substrates may be but are not limited to titanium, aluminum, zinc, iron, steel, cotton, wool, papers, other packaging materials, polyester films, glues, epoxies and/or adhesives on fiber, metals on plastic, aluminum, copper, and/or tin foils and alloys thereof, TYVEC® on a plurality of substrates, and/or GORETEX® on fibers, nitrides (including gallium nitrides, aluminum nitrides, indium nitrides, and mixes thereof) on silicon carbides, NITINOL® on a plurality of substrates, W, Ru, Ag, Au, Zn, TiN, Pt, chrome on a plurality of substrates, and anodized surfaces on a plurality of substrates.

Thus, in an embodiment of the present invention, the mobile or portable apparatus can be used to measure any of a plurality of different types of surfaces on a substrate.

In an embodiment, the mobile apparatus and/or system of the present invention is able to discern thicknesses for any of a number of surfaces on a substrate where the thicknesses are on the order of 10 nm to 0.8 cm. In an alternate embodiment, the apparatus and/or system is able to discern thickness between about 50 nm and about 0.1 cm. In an alternate embodiment, the apparatus and/or system of the present invention is able to discern thicknesses on the order of about 50 nm to 0.5 mm. In an alternate embodiment, the apparatus and or system is able to discern thicknesses in the region of about 300 nm to 1100 nm, alternatively, 730-1150 nm.

In an embodiment, the apparatus and/or system of the present invention is able to take a plurality of measurements per second. Generally, as one decreases the spectral window, the number of measurements that can be made increase. For example, if a spectral window is being measured wherein the thicknesses are between about 300 nm to 1150 nm, about 200-500 measurements per second can be made. In contrast, if the spectral window is about 730-1150 nm, about 200 to about 1000 measurements per second can be made.

The accuracy of the apparatus and/or system is dependent on a number of factors. These factors include the dispersion of the surface that is being measured, the accuracy with which the refractive index is estimated, the wavelength range being measured, and the geometric thickness of the surface.

In an alternate embodiment, the apparatus and/or measuring system, while traveling from beginning to end of a process of measuring thicknesses, can also be used to measure other properties. These properties include but are not limited to being able to measure concentration, turbidity, reflectivity, transmisivity, and/or color. The incorporation of the means to measure these properties is facilitated by the implementation of additional analytical software algorithms that are able to measure concentration, turbidity, reflectivity, transmisivity, and/or color. Thus, software employing a FFT (Fast Fourier Transform) algorithm to measure the thickness of substrates is used in conjunction with software to measure other physical properties (such as those described above).

Moreover, in an embodiment, additional process information can be obtained by the apparatus and/or system. The apparatus and/or system may have one or more of the following pieces of equipment associated with it: an integrated pH monitor, and/or a pH controller, an integrated temperature monitor and/or a temperature controller, a coating thickness monitor that is used to control the end point of a batch process, a coating thickness monitor that is used to control the set point of a continuous process, a wireless communication link that facilitates communication to a remote host processor, a battery operated rechargeable power supply, and/or a network server that is used to communicate with each rack system.

In an embodiment, the present invention also relates to clamps constructed from non-conductive polymers or from other non-conductive material, which are capable of being positioned by hand when operators load a rack with integrated fiber optic probes. In an embodiment, the clamps are attached to a rack and the clamps contain one or a plurality of probes that can be used to measure thicknesses at any of a plurality of locations of a surface on a substrate. The clamps facilitate the positioning of the one or a plurality of probes at one or a plurality of locations allowing for one or a plurality of measurements using those one or a plurality of probes.

In an embodiment, the apparatus is attached to at least one anodizing rack and can be used to measure the process properties in each anodizing tank. The measuring probes are optionally coupled through clamps to minimize the optical path between the probes and the samples to be measured. The use of one or more probes associated with clamps simplifies the measurement of abstract shaped samples because the probes can be mounted in a way that allows them to attain close proximity to the samples.

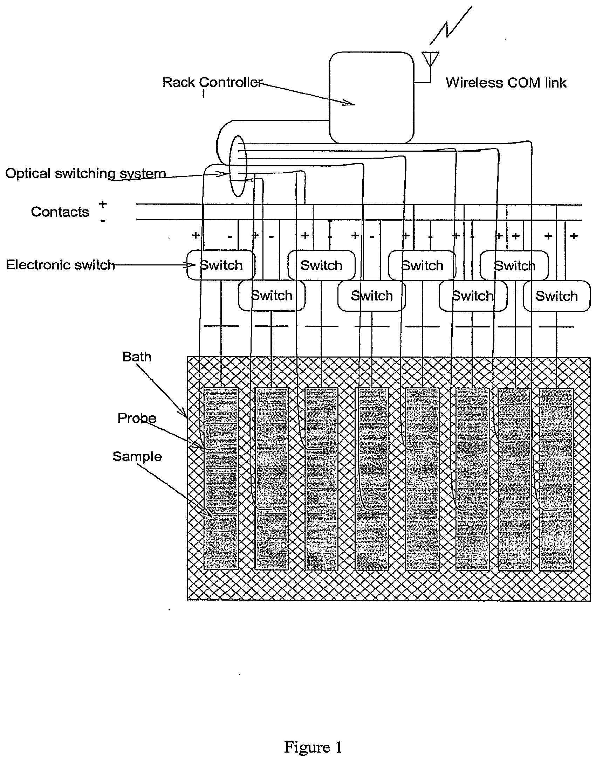

Referring now to the drawings in general and FIG. 1 in particular, it will be understood that the illustrations are for the purpose of understanding one embodiment of the invention and describing one embodiment of the invention. This figure is not to be construed to limit the invention thereto. Those of skill in the art will recognize that modifications can be made to the presently shown embodiment without departing from the scope and spirit of the present invention. Modifications include, for example, using the apparatus and/or system of the present invention to measure any one of a plurality of surfaces on any of a plurality of substrates at one or any of a plurality of locations. With this scope in mind, Applicants herein describe the present invention with regard to FIG. 1, which shows an anodizing apparatus and/or system.

As can be seen in FIG. 1, an anodizing surface measuring system includes a bath in which, a substrate may be anodized, a plurality of probes, and a plurality of substrates (i.e., samples) that can be sampled for surface measurements. The electronics of the system include one or more switches including an optical switch and/or electronic switches for sampling and/or anodizing the surface on the substrate at any of a plurality of locations.

Moreover, figure 1 shows a rack apparatus that includes a rack controller and a wireless communication (COM) link. The anodizing system optionally also contains one or more radiation sources, one or more algorithms, one or more detectors, one or more controlling interfaces, one or more user interfaces (such as a computer), one or more radiation guides, other electronics, and other mechanical mechanisms.

The system is able to measure a coating thickness of the substrate at a plurality of locations prior to, at the same time as, or after an anodized surface is applied to a substrate. In other words, the present invention contemplates an apparatus that is not only able to measure a surface thickness but is also able to apply that surface at the same time, immediately prior to, or immediately after a measurement is made. FIG.1 is shown as being able to measure an anodized substrate, but it should be understood that this surface could just as easily be any other surface, for example, a painted surface.

As shown in FIG.1, the probes are optical fibers that are fixed (relative to the position of the rack controller) when measuring a surface thickness of a sample. The rack controller moves the rack containing the rack controller, the optical switching system and the probes by a wireless COM link. Any of a plurality of remotely controlled systems can be used as a wireless controlled system including the use of light, microwave, IR signals and/or RF signals. Although the rack is shown employing a wireless COM link, it should be understood that the rack could also employ a non-wireless system such as a wired system that attaches the rack controller to a remotely positioned controller that transmits information as to where the rack should be positioned to allow the one or a plurality of probes to take measurements. The rack controller can either be preprogrammed or can receive signals iteratively from an operator who instructs the rack where to go in order to have the probes correctly positioned to take measurements. Accordingly, it should be apparent that the operator can tell the rack where to go interactively after processing data (i.e., an operator iteratively can tell the rack to go to a new position to take a measurement). For example, if a thickness measurement is taken at one location, the operator can evaluate the thickness at that location prior to
instructing the apparatus to take another measurement using a different probe at an alternative location, or alternatively, prior to instructing the rack (with the probes fixedly attached) to move to a new position. If the thickness is not satisfactory, the operator may instruct the apparatus to apply a thicker surface at the location where the initial measurement was made.

In FIG. 1, an embodiment is shown wherein the probes are fixed relative to the rack controller. Because the probes are optical fibers, they can be moved to a different fixed position relative to the rack controller. Thus, an operator can position the probes at any of a plurality of positions prior to taking the first measurement that allow measurements to be taken at any plurality of locations. Once the probes are positioned, the rack controller in moving the rack allow the probes to sample a substrate thickness at any of a plurality of sample points. For example, the rack can move vertically or horizontally to any of a plurality of positions, which in turn move the probes allowing the probes to encounter a sample at any of an infinite number of positions. Once a desired position is obtained, a radiation source sends radiation to the optical switching system, which optionally modulates the signal to measure any of a desired property using any desired probe. This modulated radiation signal is sent to the desired probe allowing the desired measurement to take place. The probe detects the reflected and/or refracted signal which is sent back to a detector (not shown) connected to a processor (not shown) which will output the desired measurement.

The optical switching system can optionally be employed in the system or apparatus that allows any of a plurality of different measurements to be taken. For example, in one embodiment, the optical switching will transmit radiation to one probe that can measure the anodized thickness at one particular location using probe A. Subsequently, the optical switching system will transmit radiation to a second probe (e.g., probe B) to measure the thickness at another location. The optical switching system may have attenuators or amplifiers associated with it (and other electronics known to those of skill in the art) to reduce noise. Moreover, the optical switching system may have associated with it the ability to transmit different radiation wavelengths of the electromagnetic spectrum to the probe, allowing the system to be used to measure any of a plurality of different electronic transitions (e.g., UV, Visible, IR, etc.). Thus, it should be apparent that the portable or mobile apparatus and/or system of the present invention could measure for example the thickness of an anodized layer at a sample point by using probe A, then subsequently measuring the color of that sample point using probe A by switching wavelengths (using the optical switching system). Further, it should be understood that the appropriate mechanical devices and/or electronics are present in the system and/or apparatus of the present invention to measure the desired different wavelengths, for example, the desired gratings and/or prisms are used to transmit monochromatic light and the appropriate photodiode multiplier tubes can be used to amplify the detected signal.

Although Fig. 1 is shown with respect to an anodized system, it should be readily understood that this apparatus and/or system could be any of a plurality of apparatuses and/or systems. For example, the bath may not actually be a bath but rather a coating chamber that allows any of a plurality of surfaces to be placed on a substrate, such as for example an e-coating (i.e., paint) that is placed upon any of a plurality of substances. In said apparatus and/or system, the application of paint is deposited and regulated by voltage. The probes of Fig. 1 would be properly adapted for measuring the paint deposition on the substrate and all corresponding features would be appropriately adapted for measuring these surface thicknesses. For example, the optical switching system may be appropriately adapted to allow the transmission of regions of the electromagnetic spectrum that are not in the optical region.

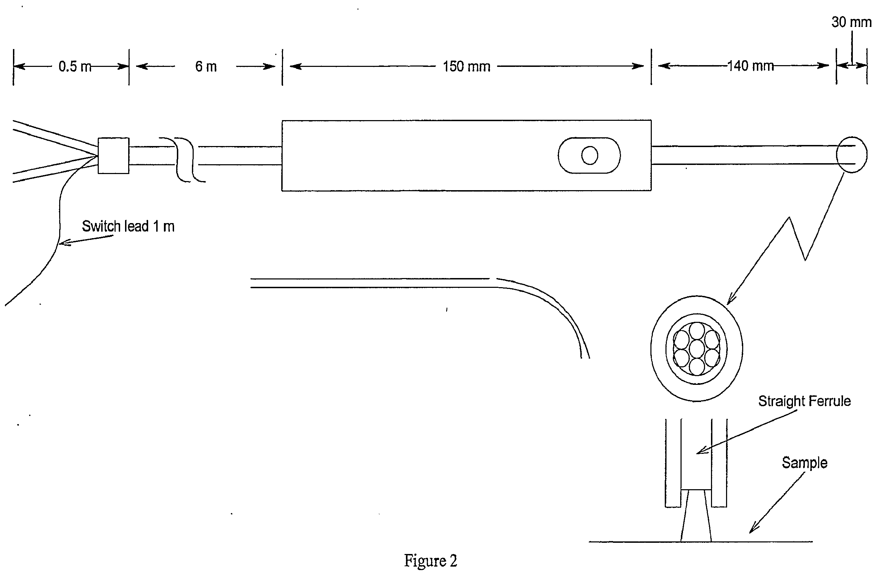

Fig. 2 shows a probe of the present invention. Fig. 2 shows a switch lead which is connected to connectors that may be up to 6 meters in length, which is in turn connected to the electronics of the probe, which is in turn connected to the probe tip which may have a ferrule, which is a ring or cap with a connector that ensures that the fibers being connected are accurately aligned so that they transmit light correctly to surface to be measured.

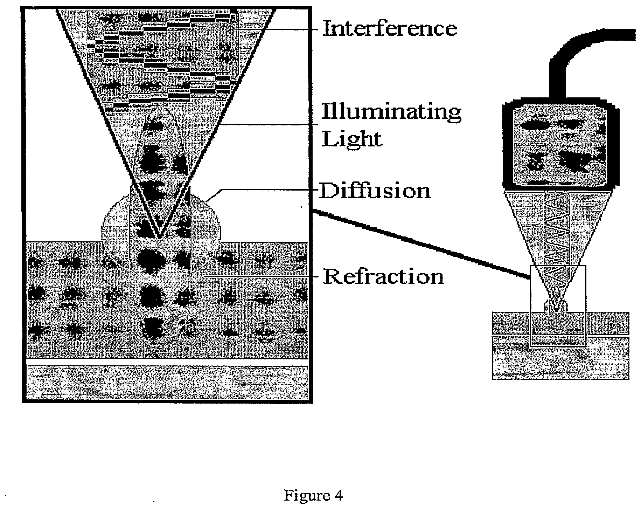

Fig. 4 shows a cross sectional embodiment of a probe showing the illuminated light hitting the surface with diffusion of some light and refraction and reflection of the light, which is in turn collected by the probe and sent to a processor for processing to determine a surface thickness. The interference pattern generated by the reflected and gathered light is shown by at the upper portion of the left-hand illustration in Fig. 4.

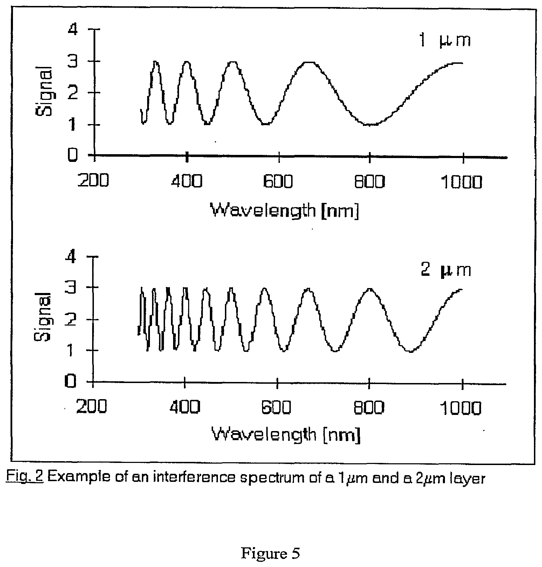

The top and bottom spectra of Fig. 5 show examples of interference spectra seen in a 1 $\mu$m and 2 $\mu$m surface, respectively. De-convolution of the signal from a time domain to a frequency domain (as shown here) using a mathematical algorithm such as an FFT (fast Fourier transform) allow one to determine the thickness of the surface being measured.

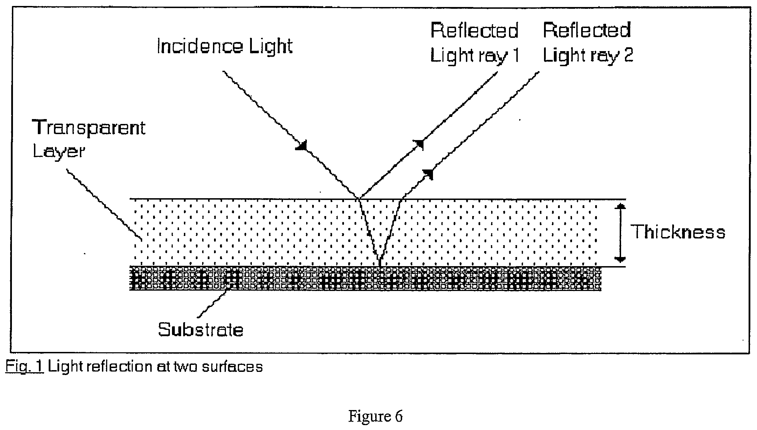

Fig. 6 shows an interference model showing the incident light being reflected at the surface of a transparent layer and at the surface, wherein the reflected light is captured by the probe and processed to determine the thickness of the transparent layer.

The substrate containing a surface thickness to be measured is illuminated in one embodiment with white light. The measuring apparatus and/or system captures the reflected light from the surface. Multiple reflections may be detected from the layer(s) leading to a time difference from reflection from a first layer and a second layer. Coherence conditions may occur, which will lead to interference spectr(um)/(a) being collected in the time domain. Undisturbed superposition of reflected light rays as shown in Fig. 6 may lead to the periodical amplification and extinction of the spectrum of a white continuum. The superposition of the two reflected light rays, because they are not purely additive, will result in an interference spectrum. These interference spectra are then deconvoluted using a mathematical algorithm (for example, an FFT) that allows one to generate a spectrum in the frequency domain, which in turn can be deconvoluted to give a surface thickness. The overall accuracy of surface thickness measurements are dependent upon a number of factors, such as known values of the refractive indexes of each of the surfaces to be measured. Generally, the layers should be relatively transparent in the region of the electromagnetic spectrum where measurement occurs, with minimal interference from the surface particulates.

Interference measurement techniques of the present invention can be performed independently of color and may be optimized in a given region of the electromagnetic spectrum to suit the dispersion characteristics of the layer(s) to be measured. Light guides are used in the present invention to deliver and receive light from the measuring one or more probes for analysis. Moreover, internal controls are used to guarantee the integrity of the measuring system to reduce gross errors introduced throughout daily operation.

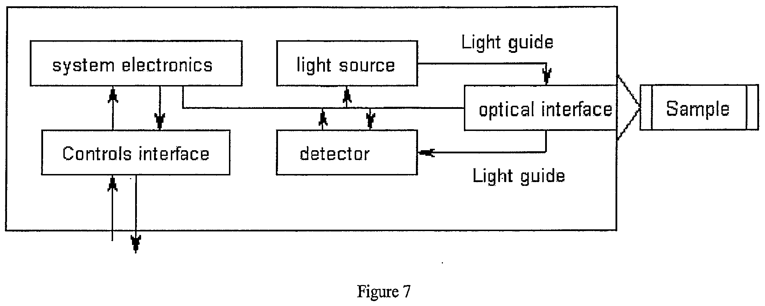

Fig. 7 shows a block diagram of the schematic operation of an embodiment of the present invention. Fig. 7 shows the various interconnections between the pathways of transmitted and received light to and from the sample with the detection of said light with the system electronics and control interface. It should be understood that part of the system electronics may include the electronics that instruct the apparatus and/or system of the present invention to mobilize to a new position that allows thickness measurement(s) at a new position.

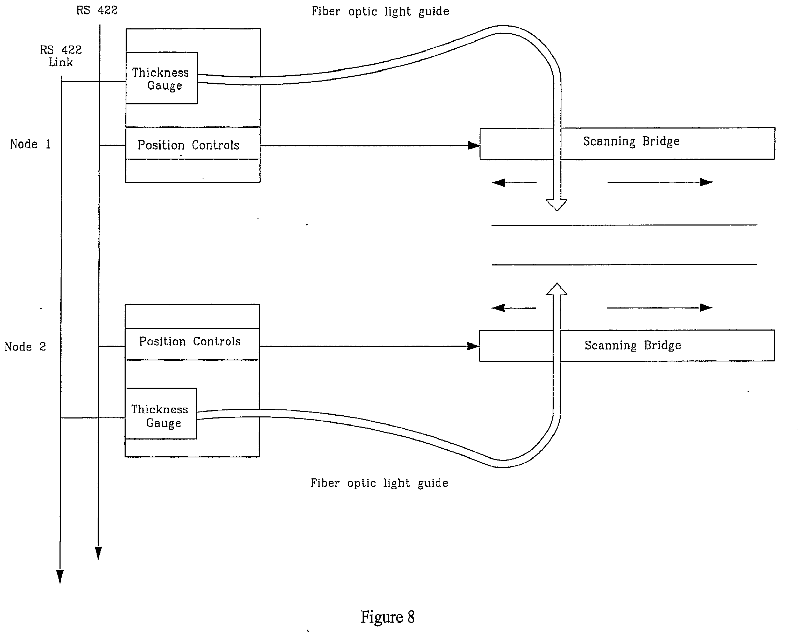

Fig. 8 shows an autonomous two-sided Thickness Gauging System wherein multiple probes may be used to determine thicknesses on either of two sides of a substrate to be measured. This embodiment shows that the thickness gauging system can be on both sides of a substrate and can determine a thickness on two surfaces on either side of a substrate. It should be understood that although Fig. 8 shows only one probe on both sides, more than one probe on each side is contemplated and therefore within the scope of the present invention. In the shown embodiment, the scanning bridges can be positioned at different positions by instructions from the position controller (i.e., position controls in Fig. 8). It is contemplated that the scanning bridges can move in concert with each other so that they are taking measurements on each side of the surface at identical locations (but on opposite sides of the substrate). Alternatively, the scanning bridges can move independently of each other so that each of the respective probes on either side of the substrate take measurements at different positions on different sides of the substrate. It is also contemplated and therefore within the scope of the invention that the probes move in concert with each other so that a probe on one side may transmit electromagnetic radiation through the substrate and this transmitted electromagnetic radiation is received by the other probe so that a thickness can be measured by communication between the two probes.

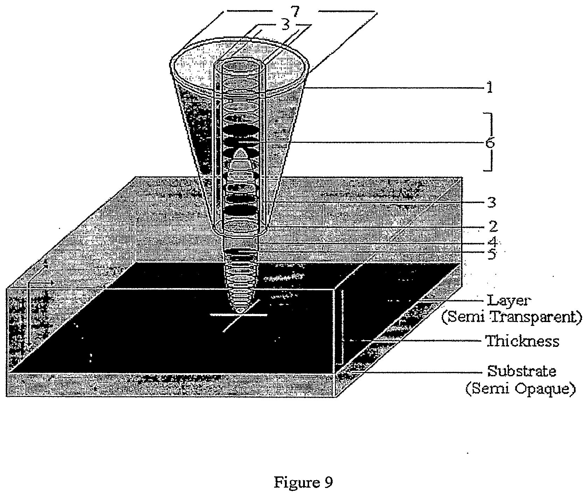

Fig. 9 shows a probe tip illuminating a surface with electromagnetic radiation. The numbers in Figure 9 refer to the following:

| | |
|---|---|
| 1 - Illuminating Light | 5 - Refracted light into the layer |
| 2 - Reflection at first border | 6 - Coherence. |
| 3 - Destruction caused by diffusion | 7 - Composite signal is comprised of |
| 4 - Refracted light returned to the surface. | diffuse, specular, and interference spectrums. |

Fig. 9 is used to illustrate some of the major parameters used in thickness measurement concepts. A cone of light 7 is used to illustrate the light source. The light source 7 sends light 1 to illuminate the substrate and at the surface some of the light is reflected immediately upon hitting the surface 2, and some light passes through the surface and is refracted 5. Diffusion occurs in almost all surface measurements to at least a small extent. Diffusion, scattering and/or absorption will occur at the same wavelength, but ultimately the wavelength at which this occurs depends mainly upon the composition of the layer. Refraction of the light occurs at the border of any two media. Upon hitting the substrate some, most of, or all of the light is reflected. Ellipsoid 4 depicts refracted light returning to the surface. The actual elliptical shape obtained depends upon the refractive index of the layer. Diffusion (including scatter and absorption) is represented by the cylinder 3, and is actually a destructive side effect of the layer's first surface roughness. The coherence pattern of light is represented by 6. Excessive diffusion may eventually destroy the interference parameter of the composite signal, which will include only diffuse reflection.

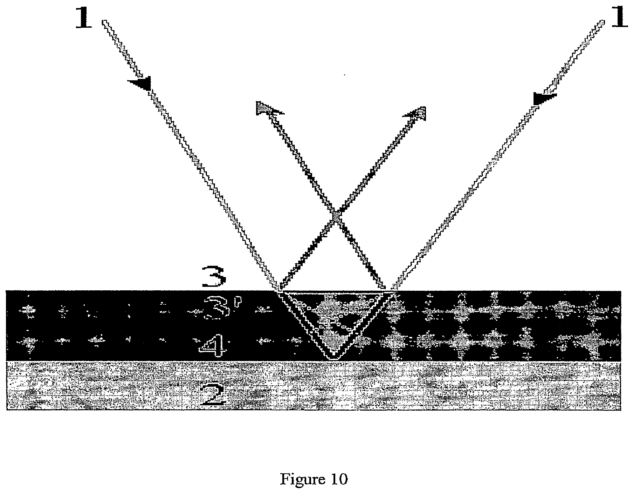

Fig. 10 shows another view of light being transmitted from a probe to a surface on a substrate and the light's refraction and reflection. Refraction occurs at the surface of two different media. In Figure 10, when light is transmitted from the probe to a surface on a substrate, refraction occurs at the first interface 3 between air (or alternatively, any liquid that the substrate containing the surface may be submerged in) and the surface on the substrate. Some of the refracted light passes through the surface on the substrate until it encounters the second border 4 at the substrate. Some of the light is reflected and heads back towards the first interface, whereupon it encounters a third interface 3', which is the interface between the surface on the substrate and air (or alternatively, the liquid in which the substrate containing the surface is submerged). The light that passes through this interface is gathered by the probe and sent to a processor for processing to determine the thickness of the surface on the substrate. Light, which is not reflected back at the second interface (to the first interface) is refracted into the substrate 2.

The refractive index at the first interface is a parameter that when estimated and/or measured accurately will give accurate thickness measurement data. If the surface material type is known, the refractive index usually can be accurately entered resulting in accurate surface thickness measurements. If the refractive index is known, the measurement can be done at a particular calibrated single wavelength that results in accurate thickness measurements. If the refractive index is not known, generally the surface is measured at the Sodium D line is used for measurement (i.e., 589 nm).

Although single wavelengths can be used, it is contemplated and therefore should also be understood that various interferometers (e.g., Mickelson Interferometers) and other electronics and mechanical systems can be used in the apparatus and/or system of the present invention that allow one to take advantage of Fourier Transform algorithms and other algorithms to simultaneously process a plurality of wavelengths allowing for rapid data acquisition and deconvolution. The switching system (e.g., an optical switching system) can be used to allow a plurality of wavelengths to be transmitted to the probes and the data collected by the probes sent back to the switching system and transmitted onto a processor (not shown in any figure but the processor is usually a computer programmed with mathematical algorithms) for measurement. Moreover, it is contemplated and therefore within the scope of the present invention that signal averaging (using a plurality of measurements) may occur in the apparatus and/or system of the present invention to give better signal to noise ratios as well as more accurate data.

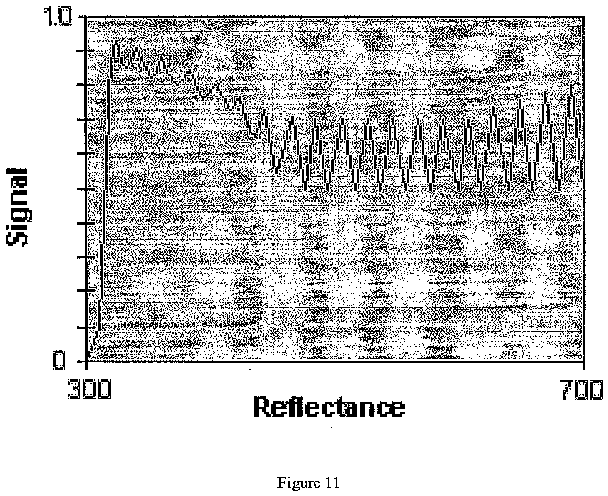

Fig. 11 shows a composite reflectance spectrum of a coherent signal of light that is deconvoluted to ultimately give a surface thickness measurement. Coherence generally occurs when an adequate signal is returned to the first interface (see figure 10) from within the layer. Most of the measured signal is composed of incident light reflected from the first surface. Simultaneous signals or harmonics are generated due to the time difference that occur from the reflected light and the light that travels through the surface layer to the substrate and back to the first surface. A resulting signal is shown in Figure 1 1. Precision thickness gauging techniques can be employed through the careful evaluation of this composite reflection spectrum that allows thickness determinations. In an embodiment, the interference signal is superimposed onto the surface reflection spectrum. The signal can be measured simultaneously at a plurality of wavelengths by using for example the interferometers discussed above and/or a high speed simultaneous diode array spectrometer. Mathematical algorithms can then be employed to deconvolute these plurality of wavelengths to generate the desired thickness determination(s).

As an illustration, coherence can occur through the illumination of a sample with a polychromatic light source. A simplified equation that can be used to approximate the thickness of a surface is given by the following formula.

$$Y = A \cos (4\pi nd)$$

Wherein A is the amplitude of the signal; Y is the interference spectrum; $\pi$ is approximately 3.1416; n is the index of refraction at a first interface; and d is the geometric thickness. Generally, all values are known or can be approximated (for example, in the case of the refractive index) except for the thickness d, which can be solved because all other values are known.

The relative accuracies of measurements will be dependent upon the accuracy with which the refractive index can be determined. The relative accuracies and measuring speeds with which the mobile apparatus and/or system of the present invention has determined thicknesses are shown in table 1 immediately below.

Table 1.

| Wavelength range | Average surface thickness | Error bar | Measuring speed |
|---|---|---|---|
| 300-1100 nm | 0.5-4.0 $\mu$m | +/- 0.002 $\mu$m | 200-500 measurements/sec |
| 300-1100 nm | 5-10 $\mu$m | +/- 0.06 $\mu$m | 200-500 measurements/sec |
| 300-1100 nm | 15-35 $\mu$m | +/- 0.002 $\mu$m | 200-500 measurements/sec |
| 730-1150 | 2.0-35 $\mu$m | +/- 0.1 $\mu$m | 200-1000 measurements/sec |

In another embodiment, the present invention relates to a clamp constructed from a non-conductive polymer or from some other non-conductive material, which is capable of being positioned by hand when operators load a rack with integrated fiber optic probes. In an embodiment, this device contains a plurality of probes that can be used to measure thicknesses at any of a plurality of locations and facilitates improved positioning of the probe at any desired location.

In an embodiment, the present invention relates to one or more addressable optical switches, which facilitates switching spectrometer signals from various probes thereby allowing regulation of throughput so that the measuring system is kept within boundary conditions, consequently allowing a plurality of a different sample signals to be measured.

In another embodiment, the present invention relates to employing software algorithms which facilitates the control of the at least one optical switch, allowing one to appropriately address the various measurement locations by being able to transmit the appropriate radiation to the desired probe. The software algorithms also optionally allow the radiation that is detected by the targeted probe to send data to an appropriate processor, allowing the data to be processed to give a thickness measurement or some other appropriate information.

In another embodiment, the present invention relates to a software routine, which facilitates sampling of each probe and recording data into a database. The data that is read into a database can be used for a plurality of purpose. One example is that the database data can be used to keep records, for example when anodizing to look at the efficiency of the anodizing process over a given period of time. Moreover, a software algorithm may be employed that facilitates a comparison of measured results obtained from any one or more probe(s) and/or location(s) of the one or more probe(s) with respect to a process table of data allowing referencing of each probe and a set of process controls. This allows for feedback mechanisms wherein data that is obtained from one or more probes can iteratively be used to modify an ongoing process. For example, if probe A takes a measurement of a surface thickness at a given location and it is found that the surface thickness is not sufficiently thick, the process that is adding the surface to a substrate can be iteratively modified to make the surface added at that part of the substrate thicker. A subsequent measurement will then allow an operator (or the preprogrammed algorithm) to determine if further modifications need to be made.

The apparatus and/or anodizing system of the present invention is capable of determining a coating thickness of a substrate (for example, an anodized surface) at a plurality of locations. This is advantageous over being able to monitor a coating thickness at only one point because when monitored at only one point, the measurement does not fully represent the coating in various zones of the anodizing bath. By measuring at a plurality of points, the anodized system can be measured more efficiently and more accurately, leading to a more uniformly coated surface (because the coatings can be applied iteratively with the measurements). Moreover, by having a plurality of probes located at various positions, this overcomes the need to position a given measuring probe at any one specific place prior to measurement (leading to more rapid measurements). This would be advantageous, for example, in an industry wherein anodized surfaces are created in large amounts (for example, in the beverage packaging industries).

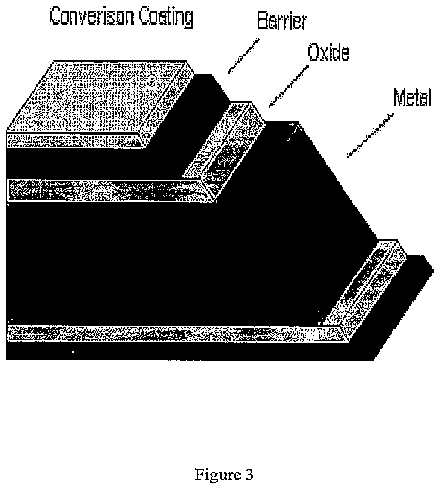

In the beverage packaging industries, and in particular, the aluminum can packaging industry, the process of determining the thickness of various surfaces may lead to potentially large monetary savings in the industry. Fig. 3 shows a cross-sectional area of can stock. In this can stock, the inside of the metal (e.g., aluminum) layer may be covered with an oxide layer and/or a barrier layer and/or a conversion coating layer. The oxide layer is often added to the metal layer to enhance the bonding properties of the conversion coatings. The barrier layer(s) are applied to isolate the containment from inside of the finished can. Fig. 3 also shows layers on the outside of the can stock. These layers are often protective layers that are added to the exterior of the can, which protect the metal from the environment and may enhance the ability to print on the can by the end-user. By being able to measure each of these layers while the cans are being made may provide automatic feedback to a can-making operator that will allow the can making process to be iteratively adjusted so that the correct layer thicknesses are applied to the can. For example, being able to measure in situ thickness of the can stock may also allow optimization of the oxide layer which should facilitate improved coil line efficiency. The productivity may also be enhanced by eliminating costly lab testing and validation of can stock layer thicknesses. Moreover, in situ testing may also eliminate health and safety issues caused by destructive testing methods.

The plurality of probes in the apparatus and/or system of the present invention also has the advantage of allowing positioning of the probes prior to measurement. Once the probes are in place, a plurality of measurements can be taken without having to reposition a probe. In an apparatus or system that has only one probe, an operator may have to reposition a probe after a measurement. The incorrect or inconsistent positioning of the probes with respect to the sample causes substantial variation in the optical throughput within the measuring system leading to the possibility of errors.

In an embodiment, the present invention relates to optionally having a plurality of individual rack conductors associated with the thickness measurement system. The conductors facilitate the regulation of power into various zones of the anodizing bath allowing one to accurately regulate current density control throughout the anodizing bath. An electronic control switching system capable of controlling either AC or DC power sources is employed for applying and removing power to each anodization zone, allowing careful regulation of different zones in the anodizing bath, which ultimately leads to a more uniformly applied anodized surface.

The apparatus and/or system further employs a multi-zone coating thickness monitor (e.g. that includes at least a plurality of fiber optic light guides to transmit light to and from the substrate), allowing for a plurality of measurements, which also ultimately leads to a more uniformly applied anodized surface. The apparatus or system also optionally uses an electronically controlled optical modulator that will facilitate optimal throughput.

In an embodiment, the present invention also contains a self optimizing algorithm which super positions a light modulation signal which is induced by an interference effect to an optimally self tuning algorithm used to determine thickness. As an example, the self tuning algorithm may be an FFT algorithm. The utilization of this algorithm cures the problem of an anodization layer that is semi transparent in certain regions of the measured electromagnetic spectrum (i.e., the regions that constitute the UV, VIS, Near IR and IR regions from 180-2500 nm). This self optimizing algorithm will automatically optimize the algorithm (e.g., an FFT algorithm) for specific layer thickness ranges in the region comprising thickness ranges from 0.1 microns to 150 microns. In thinner layer applications, where the anodization layer begins to form, other algorithms are available for analysis until the film layer reaches optimal boundary conditions of the algorithm (e.g., FFT algorithm).

Accordingly, it should be apparent to those of ordinary skill in the art, that the present invention has the following advantages:

1. The integration of a measuring and control system to a mobile or portable apparatus and/or system that allows for simultaneous application of a surface and measurement of that surface thickness. In an embodiment, the mobile or portable apparatus and/or system is directed to a mobile or portable apparatus that has an anodizing rack that allows for simultaneous anodization and measurement of the anodized surface of the substrate.

2. The use of a spectrometer or photo diode as a detector.

3. The use of acoustic, electromagnetic, or radio frequency emission.

4. The employment of additional mathematical algorithms for use in different phases of the process including but not limited to algorithms designed to measure transmission, reflectance, color, optical density, scattering, and absorption.

5. The employment of a programmable optical switch/attenuator to accommodate different measuring probes allowing for measurements from a plurality of locations.

6. The employment of a plurality of novel clamps for directly mounting the probes to position the probes toward the samples.

7. The employment of a multi-zone anodizing rack for accurately controlling current density at each of the zones allowing for efficient and accurate application of an anodized surface.

8. An integrated, electronically controlled switching system and AC/DC regulator for adjusting power to different zones in the rack allowing for efficient and accurate application of an anodized surface.

9. A wireless communication link including a host controller to communicate with the traveling controllers allowing for a mobile or portable apparatus and/or system to move either vertically or horizontally to acquire data at the probes from a plurality of positions.

It is contemplated and therefore within the scope of the present invention that the apparatus and/or system of the present invention optionally has equipment that allows one to measure various optical properties of reflected light from the surface of an anodized surface (in addition to being able to measure the anodized surface thickness). Moreover, the present invention also relates to being able to measure a surface prior to an anodization phase of the process.

The present invention, in one embodiment, is also directed to an anodizing system with integral reflectivity and color monitoring for appearance control of an anodized product. The facilities described herein will accommodate such measurement. Algorithms that can be used, include for example ASTM standard E 308 for color measurement and an integrated color end point controller or integrated set point controller by which each provide a means for controlling color either to a desired end point or to maintain a continuous color control. Generally, the colorant addition phase occurs after anodizing and may include process controls that facilitate pore size variation to accommodate interference type colorants.

If the apparatus is designed to give instructions for a substrate to be anodized at its surface, the bath associated with the apparatus may optionally include an electrode, a treatment bath, and a power source, which may be a direct current power source. Also, the bath may include a reservoir for storing an electrolyte and a pump for circulating electrolytic solution. The electrolyte may be supplied to the treatment bath through a feed pipe and an electrolyte inlet in the treatment bath. A portion of the electrolyte may be returned to a reservoir through an electrolyte outlet and a return pipe. Another portion of the electrolyte may be returned to the reservoir through an overflow port and an overflow pipe. The electrolyte in the reservoir is controlled by a predetermined temperature and by a means of controller.

Anodization may occur by the supplying of electric current from a DC power source that flows through the electrode and the electrolyte. The electrical current flows to the substrate through an anodizing film. Subsequently, the electric current flows back to the DC power supply. More details concerning baths and anodizing systems are discussed in, for example, U.S. Pat. Nos. 5,851,373; 5,693,208; 4,894,127; 4,537,664; 4,478,689; 4,251,330; 4,014,758; and 3,959,091. After supplying the one or more probes with radiation to measure surface thicknesses, the one or more probes (which may include a foil, sheet, or wire product) of the present apparatus and/or system capture the reflected and/or refracted radiation from the substrate (i.e., sample). Prior to anodizing, the surfaces of substrate may be cleaned by immersing the substrate in a detergent to remove foreign materials such as grease and dust that interfere with coating adhesion. A further cleaning of the substrate may include the process of removing scale or other surface compounds by immersion in a suitable aggressive liquid; (sometimes electrochemically assisted to clean the surface) followed by an acid removal step that may involve immersing the substrate in deionized water. The continuous anodizing of the substrate may then follow.

The radiation source of the present invention may be polychromatic, for example, any of a combination of ultraviolet (UV), visible, near infrared, or infrared (IR), or monochromatic. A radiation source that is polychromatic may be a subset of any of UV (having wavelengths in the range of about 4 to about 350 nanometers), visible (having radiation wavelengths to which the organs of sight react, ranging from about 350 to about 700 nanometers), and IR (having wavelengths between 750 nanometers and 1 millimeter). Examples of such subsets include vacuum ultraviolet radiation (UV radiation having wavelengths less than about 200 nanometers; so-called because at shorter wavelengths the radiation is strongly absorbed by most gases), far-ultraviolet radiation (the short-wavelength region of the UV range: about 50 to about 200 nanometers), near-ultraviolet radiation (ultraviolet radiation having wavelengths in the range of about 300 to 400 nanometers), far-infrared radiation (long-wavelength region of the infrared range: about 50 to about 1000 micrometers) and near-infrared radiation (radiation having wavelengths in the range of about 0.75 to about 2.5 micrometers).

The coating thickness apparatus may optionally include an additional radiation source. The radiation source and the optional additional radiation source may be any one of polychromatic and monochromatic and are selected to compliment each other for example, to improve the intensity and breadth of reflected radiation available for determining the thickness of a coating on a substrate. Typically, a single radiation source has an intensity that is greatest in a central range but decreases on either end. By complimenting the one radiation source with an additional source of radiation, there can be an overlap of the decreasing intensities to remove them. In this way, several advantages may be realized. For example, there may be an increase of signal to noise ratio with respect to the reflected radiation. Also, there may be an increase in the range of reflected radiation that can be captured.

The one or more probes of the apparatus and/or system my optionally also include a guide for delivering the radiation back to a detector and may also optionally include a collimator. The collimator, if present, may be used to direct the captured reflected radiation into a coupler that directs radiation to a detector.

The one or more detectors may optionally be of a type that demodulates the reflected spectrum once it is received. Examples of equipment that might be used with detectors are included in, for example, U.S. Pat. Nos. 6,052,191; 5,999,262; 5,289,266; 4,748,329; 4,756,619; 4,802,763; 4,872,755; and 4,919,535. Part of determining the coating thickness is through demodulating the reflected spectrum. Various techniques are known for measuring this including a color interference method, an absorption method, a ratio of the intensity of the maximum wavelength to the intensity of the minimum wavelength and a fast Fourier transform (FFT) method (e.g., the processing of a signal generated by waves striking a detector, whereby the signal is transformed into a digital time series for spectrum analysis). More details concerning single and multiple coating thickness determination are discussed in, for example, U.S. Pat. Nos. 6,128,081; 6,052,191; 5,452,953, 5,365,340; 5,337,150; 5,291,269; 5,042,949; 4,984,894; 4,645,349; 4,555,767; and 4,014,758.

In an embodiment, the one or more coating thickness detectors optionally include one or more guide systems. The one or more guide systems act as a coupler to direct the reflected radiation from the one or more probes to the one or more detector. The one or more guide systems may also optionally act to provide a source radiation to the surface of substrate through the probe. Alternatively, a radiation source may be integral to the one or more probes to provide a source radiation to capture the reflected radiation from the coated substrate.

In a preferred embodiment, the one or more guide systems are optionally comprised of fiber optic guides that may include a plurality of fibers arranged in a manner to capture the radiation optimally, having a composition that transmits the reflected radiation without attenuation. The one or more guide systems may include multiple components. The one or more guide systems may be optionally coupled with a radiation source to direct radiation to the surface of the substrate, as well as being coupled to the one or more detectors to direct the reflected and/or refracted radiation to the one or more detectors for analysis. Guide systems may optionally include multiple sets of fibers when the coating thickness monitor includes multiple radiation sources and multiple detectors. The configuration and composition of optical fiber bundles are selected to optimally transmit the radiation of interest.

The anodizing system apparatus and/or system may further include a controller that may include, for example, a computer. The anodizing system may operate without the computer or an intermediate box to communicate with the controller.

The controller system may be able to operate in situ giving real time measurements of the coating thickness by having the one or more probes within the bath.

In an embodiment, the anodizing voltage provided by power supply can be adjusted during the process to give the desired coating on the substrate. There are zones present that allows each of the zones to be individually regulated allowing a defined current to enter the zone, which will allow well controlled anodization to occur. Likewise, the bath temperature and the anodizing time may be controlled. More details concerning controllers that may be used in anodizing systems are discussed in, for example, U.S. Pat. Nos. 5,980,078; 5,726,912; 5,689,415; 5,579,218; 5,351,200; 4,916,600; 4,646,223; 4,344,127; and 4,396,976.

The mobile or portable apparatus of the present invention optionally is a mobile apparatus that has one or more of the following features: the mobile apparatus has one or more wheels, the mobile apparatus is on a rack, the mobile apparatus can be positioned remotely, the mobile apparatus can be hand-carried, the mobile apparatus is robotic, the mobile apparatus has a coordinate measuring machine (CMM), and/or the mobile apparatus has a plurality of probes. More details concerning motion control and robotics are discussed in, for example, U.S. Pat. Nos. 5,872,892; 4,979,093; 4,835,710; 4,417,845; 4,352,620; and 4,068,156.

CMM systems employ creating an arbitrary origin wherein all subsequent measurements are taken relative to that origin. From the origin, either two or three dimensional table of coordinates can be programmed from the origin to instruct probes where to next go for subsequent measurements. The CMM system, in an embodiment, can be overridden by commands from an operator. For example, an operator may instruct the probes to stop measurement(s) at one location, to proceed to a second location and to take measurements at that second location.

In an embodiment, the mobile apparatus of the present invention may optionally be positioned remotely by a wireless COM link. In the method of the present invention, the coating thickness apparatus is optionally moved on a rack via a track that allows for horizontal and vertical movement of the rack. An operator can iteratively move the coating thickness apparatus or alternatively, the coating thickness apparatus may be optionally moved via a preprogrammed algorithm.

The above invention has been primarily described with reference to an apparatus and/or system that is used to measure and/or apply an anodized surface to a substrate. As was previously described, it should be understood that the apparatus and/or system is a generic system that can just as easily measure any of a plurality of surfaces on a substrate. As alluded to above, the apparatus and/or system can have any one or a plurality of systems that allow for the measurement of other physical properties associated with the substrate(s) and/or process. It is contemplated and therefore within the scope of the invention that any one or more features from any embodiment previously described can be combined with any one or more features of any other embodiment. Any time a range is mentioned in the above disclosure, it is contemplated and therefore within the scope of the invention that any real number in that range is a contemplated endpoint for a range. For example, if a thickness measurement range of 10 nm to 0.8 cm is disclosed, it is contemplated and therefore within the scope of the invention, that any range that falls within this range is contemplated. For example, a range of 12.52 nm to 0.41 cm is contemplated, even though both of these endpoints are not explicitly mentioned. Finally, the scope of the present invention is not to be limited by the above disclosure but rather is to be defined by the below claims.

**Claims**

1. A mobile apparatus for measuring thickness of a coating on a surface of a substrate comprising:

a coating thickness monitor for measuring the thickness of at least a portion of the coating on the substrate, said coating thickness monitor including:

(i) at least one radiation source for providing radiation (1) to be directed towards at least a portion of the coated substrate,

(ii) at least one probe for directing said radiation (1) at said at least a portion of the coated substrate and for capturing at least a portion of the radiation reflected (2) and refracted (4) by the coating on the coated substrate, the captured radiation (7) being at least a portion of the radiation directed towards the coated substrate (1) from said radiation source;

(iii) at least one detector in communication with said at least one probe, said at least one detector capable of processing the captured radiation (7) to allow a determination of at least the thickness of the coating on the substrate; and

(iv) a means of anodizing the substrate to form the coating on the substrate;

**characterised in that**:

the monitor additionally comprises an optical switching system capable of transmitting said provided radiation (1) to said at least one probe and said captured radiation (7) from said at least one probe to said at least one detector; the monitor allowing determination of the thickness of the coating on the substrate at a plurality of locations;

and the means of anodizing comprises a continuous volume of electrolyte comprising different zones wherein different current levels can be applied to each of said different zones.

2. The mobile apparatus of claim 1, wherein the coating thickness monitor is designed to measure one or more members selected from the group consisting of an anodized coating.

3. The mobile apparatus of claim 1 or 2, wherein the mobile apparatus has one or more of the following features: the mobile apparatus has one or more wheels, the mobile apparatus is on a rack, the mobile apparatus can be positioned remotely, the mobile apparatus can be hand- carried, the mobile apparatus is robotic, the mobile apparatus has a coordinate measuring machine (CMM) and the mobile apparatus has a plurality of probes.

4. The mobile apparatus of any preceding claim, comprising a remotely positionable rack.

5. The mobile apparatus of any preceding claim, wherein the mobile apparatus is positioned remotely by a wireless COM link.

6. The mobile apparatus of any preceding claim, wherein the different current levels are applied via electronic switches.

7. A method for measuring a thickness of a coated substrate comprising the steps:

i) providing a coating thickness apparatus for measuring the thickness of at least a portion of a coating on a substrate, said coating thickness apparatus having at least one radiation source, at least one probe and at least one detector;

(ii) providing radiation (1) via the at least one radiation source and directing said radiation towards the at least one probe,

(iii) directing said radiation (1) from said at least one probe to at least a portion of the coated substrate,

(iv) capturing at least a portion of the radiation reflected (2) and refracted (4) by the coated substrate at the at least one probe, and transmitting said radiation reflected and refracted (7) to said at least one detector,

(v) processing said radiation reflected and refracted (7) to determine a thickness of the coated substrate;

(vi) moving said coating thickness apparatus to a new location; (vii) repeating one or more of steps (ii)-(vi), and

(viii) anodizing the substrate to form the coating on the substrate;

**characterised in that**:

the coating thickness apparatus comprises an optical switching system capable of transmitting said provided radiation (1) to said at least one probe and said captured radiation (7) from said at least one probe to said at least one detector;

the method further comprises determining the thickness of the coating on the substrate at a plurality of locations; and

the anodising of the substrate is carried out in different zones in a continuous volume of electrolyte, wherein different current levels can be applied to each of said different zones.

8. The method of claim 7, wherein the at least one probe comprises optical fibers.

9. The method of claim 7 or 8, wherein the coated substrate is coated with an anodized layer.

10. The method of claim 7, 8 or 9, wherein the coating thickness apparatus is moved via a track.

11. The method of any of claims 7-10, wherein an operator can iteratively move said coating thickness apparatus.

12. The method of any of claims 7-11, wherein said coating thickness apparatus is moved via a preprogrammed algorithm.

13. The method of any of claims 7 - 12, further comprising moving said coating thickness apparatus by a wireless communication link.


**Patentansprüche**

1. Mobile Vorrichtung zum Messen der Dicke einer Beschichtung auf einer Oberfläche eines Substrats, umfassend:

eine Beschichtungsdicken-Kontrolleinrichtung zum Messen der Dicke mindestens eines Teils der Beschichtung auf dem Substrat, wobei die Beschichtungsdicken-Kontrolleinrichtung Folgendes umfasst:

(i) mindestens eine Strahlungsquelle zum Bereitstellen von Strahlung (1), um auf mindestens einen Teil des beschichteten Substrats gerichtet zu werden,
(ii) mindestens einen Messfühler zum Richten der Strahlung (1) auf den mindestens einen Teil des beschichteten Substrats und zum Erfassen mindestens eines Teils der von der Beschichtung auf dem beschichteten Substrat reflektierten (2) und gebrochenen (4) Strahlung, wobei es sich bei der erfassten Strahlung (7) um mindestens einen Teil der von der Strahlungsquelle auf das beschichtete Substrat (1) gerichteten Strahlung handelt;
(iii) mindestens einen Detektor in Verbindung mit dem mindestens einen Messfühler, wobei der mindestens eine Detektor in der Lage ist, die erfasste Strahlung (7) zu verarbeiten, um eine Bestimmung mindestens der Dicke der Beschichtung auf dem Substrat zu ermöglichen; und
(iv) ein Mittel zum Eloxieren des Substrats, um die Beschichtung auf dem Substrat zu bilden,

**dadurch gekennzeichnet, dass**:

die Kontrolleinrichtung außerdem ein optisches Schaltsystem umfasst, das in der Lage ist, die bereitgestellte Strahlung (1) zu dem mindestens einen Messfühler und die erfasste Strahlung (7) von dem mindestens einen Messfühler zu dem mindestens einen Detektor zu übertragen; wobei die Kontrolleinrichtung die Bestimmung der Dicke der Beschichtung auf dem Substrat an einer Vielzahl von Orten ermöglicht; und das Mittel zum Eloxieren ein verschiedene Zonen umfassendes kontinuierliches Volumen von Elektrolyt umfasst, wobei an jede der verschiedenen Zonen verschiedene Strompegel angelegt werden können.

2. Mobile Vorrichtung nach Anspruch 1, wobei die Beschichtungsdicken-Kontrolleinrichtung dazu ausgelegt ist, eines oder mehrere der aus einer eloxierten Beschichtung bestehenden Gruppe ausgewählten Elemente zu messen.

3. Mobile Vorrichtung nach Anspruch 1 oder 2, wobei die mobile Vorrichtung eines oder mehrere der folgenden Merkmale aufweist: die mobile Vorrichtung weist ein oder mehrere Räder auf, die mobile Vorrichtung befindet sich auf einem Gestell, die mobile Vorrichtung kann aus der Ferne positioniert werden, die mobile Vorrichtung kann in der Hand getragen werden, die mobile Vorrichtung ist eine Robotervorrichtung, die mobile Vorrichtung weist ein Koordinatenmessgerät (Coordinate Measuring Machine, CMM) auf und die mobile Vorrichtung weist eine Vielzahl von Messfühlern auf.

4. Mobile Vorrichtung nach einem der vorangehenden Ansprüche, umfassend ein aus der Ferne positionierbares Gestell.

5. Mobile Vorrichtung nach einem der vorangehenden Ansprüche, wobei die mobile Vorrichtung mittels einer drahtlosen COM-Verbindung aus der Ferne positioniert wird.

**6.** Mobile Vorrichtung nach einem der vorangehenden Ansprüche, wobei die verschiedenen Strompegel über elektronische Schalter angelegt werden.

**7.** Verfahren zum Messen einer Dicke eines beschichteten Substrats, das folgende Schritte umfasst:

(i) Bereitstellen einer Beschichtungsdickenvorrichtung zum Messen der Dicke mindestens eines Teils einer Beschichtung auf einem Substrat, wobei die Beschichtungsdickenvorrichtung mindestens eine Strahlungsquelle, mindestens einen Messfühler und mindestens einen Detektor aufweist;
(ii) Bereitstellen von Strahlung (1) über die mindestens eine Strahlungsquelle und Richten der Strahlung auf den mindestens einen Messfühler,
(iii) Richten der Strahlung (1) von dem mindestens einen Messfühler auf mindestens einen Teil des beschichteten Substrats,
(iv) Erfassen mindestens eines Teils der von dem beschichteten Substrat an dem mindestens einen Messfühler reflektierten (2) und gebrochenen (4) Strahlung und Übertragen der reflektierten und gebrochenen (7) Strahlung zu dem mindestens einen Detektor,
(v) Verarbeiten der reflektierten und gebrochenen (7) Strahlung, um eine Dicke des beschichteten Substrats zu bestimmen;
vi) Bewegen der Beschichtungsdickenvorrichtung an einen neuen Ort;
(vii) Wiederholen von einem oder mehreren der Schritte (ii)-(vi), und
(viii) Eloxieren des Substrats, um die Beschichtung auf dem Substrat zu bilden, **dadurch gekennzeichnet, dass**:

die Beschichtungsdickenvorrichtung ein optisches Schaltsystem umfasst, das in der Lage ist, die bereitgestellte Strahlung (1) zu mindestens einem Messfühler und die erfasste Strahlung (7) von dem mindestens einen Messfühler zu dem mindestens einen Detektor zu übertragen;
das Verfahren weiter das Bestimmen der Dicke der Beschichtung auf dem Substrat an einer Vielzahl von Orten umfasst; und
das Eloxieren des Substrats in verschiedenen Zonen in einem kontinuierlichen Volumen von Elektrolyt durchgeführt wird, wobei an jede der verschiedenen Zonen verschiedene Strompegel angelegt werden können.

**8.** Verfahren nach Anspruch 7, wobei der mindestens eine Messfühler optische Fasern umfasst.

**9.** Verfahren nach Anspruch 7 oder 8, wobei das beschichtete Substrat mit einer eloxierten Schicht beschichtet ist.

**10.** Verfahren nach Anspruch 7, 8 oder 9, wobei die Beschichtungsdickenvorrichtung über eine Schiene bewegt wird.

**11.** Verfahren nach einem der Ansprüche 7-10, wobei eine Bedienperson die Beschichtungsdickenvorrichtung iterativ bewegen kann.

**12.** Verfahren nach einem der Ansprüche 7-11, wobei die Beschichtungsdickenvorrichtung über einen im Voraus programmierten Algorithmus bewegt wird.

**13.** Verfahren nach einem der Ansprüche 7-12, weiter umfassend das Bewegen der Beschichtungsdickenvorrichtung mittels einer drahtlosen Kommunikationsverbindung.

**Revendications**

**1.** Appareil mobile de mesure de l'épaisseur d'un revêtement sur une surface d'un substrat, comprenant :

un contrôleur d'épaisseur de revêtement permettant de mesurer l'épaisseur d'au moins une partie du revêtement sur le substrat, ledit contrôleur d'épaisseur de revêtement comprenant .

(i) au moins une source de rayonnement permettant de fournir un rayonnement (1) devant être dirigé vers au moins une partie du substrat revêtu ;
(ii) au moins une sonde permettant de diriger ledit rayonnement (1) vers ladite au moins une partie du substrat revêtu, et de capturer au moins une partie du rayonnement réflété (2) et réfracté (4) par le revêtement sur le substrat revêtu, le rayonnement capturé (7) étant au moins une partie du rayonnement dirigé vers le substrat revêtu (1) depuis ladite source de rayonnement ;

(iii) au moins un détecteur en communication avec ladite au moins une sonde, ledit au moins un détecteur étant capable de traiter le rayonnement capturé (7) pour permettre une détermination d'au moins l'épaisseur du revêtement sur le substrat ; et

(iv) un moyen permettant d'anodiser le substrat afin de former le revêtement sur le substrat ;

l'appareil mobile étant **caractérisé en ce que** :

le contrôleur comprend en outre un système de commutation optique capable de transmettre ledit rayonnement fourni (1) à ladite au moins une sonde, et ledit rayonnement capturé (7) de ladite au moins une sonde audit au moins un détecteur ; le contrôleur permettant de déterminer l'épaisseur du revêtement sur le substrat à une pluralité d'emplacements ;

et le moyen d'anodisation comprenant un volume continu d'électrolyte comprenant différentes zones, différents niveaux de courant pouvant être appliqués à chacune desdites différentes zones.

2. Appareil mobile selon la revendication 1, dans lequel le contrôleur d'épaisseur de revêtement est conçu pour mesurer un ou plusieurs éléments sélectionnés dans le groupe constitué d'un revêtement anodisé.

3. Appareil mobile selon la revendication 1 ou 2, l'appareil mobile ayant une ou plusieurs des caractéristiques suivantes : l'appareil mobile comporte une ou plusieurs roulettes, l'appareil mobile est sur un chariot, l'appareil mobile peut être positionné à distance, l'appareil mobile peut être transporté à la main, l'appareil mobile est robotisé, l'appareil mobile est muni d'une machine de mesure à coordonnées (CMM) et l'appareil mobile comporte une pluralité de sondes.

4. Appareil mobile selon l'une quelconque des revendications précédentes, comprenant un chariot positionnable à distance.

5. Appareil mobile selon l'une quelconque des revendications précédentes, l'appareil mobile étant positionné à distance au moyen d'une liaison COM sans fil.

6. Appareil mobile selon l'une quelconque des revendications précédentes, dans lequel les différents niveaux de courant sont appliqués par l'intermédiaire d'interrupteurs électroniques.

7. Procédé de mesure d'une épaisseur d'un substrat revêtu, comprenant les étapes consistant à :

(i) fournir un appareil d'épaisseur de revêtement pour mesurer l'épaisseur d'au moins une partie d'un revêtement sur un substrat, ledit appareil d'épaisseur de revêtement comportant au moins une source de rayonnement, au moins une sonde et au moins un détecteur ;

(ii) fournir un rayonnement (1) par l'intermédiaire de l'au moins une source de rayonnement et diriger ledit rayonnement vers l'au moins une sonde ;

(iii) diriger ledit rayonnement (1) de ladite au moins une sonde à au moins une partie du substrat revêtu ;

(iv) capturer au moins une partie du rayonnement reflété (2) et réfracté (4) par le substrat revêtu au niveau de l'au moins une sonde, et transmettre ledit rayonnement reflété et réfracté (7) audit au moins un détecteur ;

(v) traiter ledit rayonnement reflété et réfracté (7) afin de déterminer une épaisseur du substrat revêtu ;

(vi) déplacer ledit appareil d'épaisseur de revêtement à un nouvel emplacement ;

(vii) répéter une ou plusieurs des étapes (ii) à (vi), et

(viii) anodiser le substrat afin de former le revêtement sur le substrat ;

le procédé étant **caractérisé en ce que** :

l'appareil d'épaisseur de revêtement comprend un système de commutation optique capable de transmettre ledit rayonnement fourni (1) à ladite au moins une sonde, et ledit rayonnement capturé (7) de ladite au moins une sonde audit au moins un détecteur ;

le procédé consistant en outre à déterminer l'épaisseur du revêtement sur le substrat à une pluralité d'emplacements ; et

l'anodisation du substrat étant réalisée dans différentes zones dans un volume continu d'électrolyte, différents niveaux de courant pouvant être appliqués à chacune desdites différentes zones.

8. Procédé selon la revendication 7, dans lequel l'au moins une sonde comprend des fibres optiques.

EP 2 002 035 B1

9. Procédé selon la revendication 7 ou 8, dans lequel le substrat revêtu est revêtu d'une couche anodisée.

10. Procédé selon la revendication 7, 8 ou 9, dans lequel l'appareil d'épaisseur de revêtement est déplacé par l'intermédiaire d'un chemin de roulement.

11. Procédé selon l'une quelconque des revendications 7 à 10, dans lequel un opérateur peut déplacer de manière répétitive ledit appareil d'épaisseur de revêtement.

12. Procédé selon l'une quelconque des revendications 7 à 11, dans lequel ledit appareil d'épaisseur de revêtement est déplacé par l'intermédiaire d'un algorithme préprogrammé.

13. Procédé selon l'une quelconque des revendications 7 à 12, consistant en outre à déplacer ledit appareil d'épaisseur de revêtement au moyen d'une liaison de communication sans fil.

Figure 1

Figure 2

Figure 3

Figure 4

Fig. 2 Example of an interference spectrum of a 1μm and a 2μm layer

Figure 5

Incidence Light

Reflected Light ray 1

Reflected Light ray 2

Thickness

Transparent Layer

Substrate

Fig. 1 Light reflection at two surfaces

Figure 6

Figure 7

Figure 8

25

Figure 9

Figure 10

Figure 11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6674533 B
- US 20040155190 A
- US 612081 A
- US 5481631 A
- US 20020149360 A
- US 4190770 A
- US 6387184 B
- US 4883578 A
- US 5851373 A
- US 5693208 A
- US 4894127 A
- US 4537664 A
- US 4478689 A
- US 4251330 A
- US 4014758 A
- US 3959091 A
- US 6052191 A
- US 5999262 A
- US 5289266 A
- US 4748329 A
- US 4756619 A
- US 4802763 A
- US 4872755 A
- US 4919535 A
- US 6128081 A
- US 5452953 A
- US 5365340 A
- US 5337150 A
- US 5291269 A
- US 5042949 A
- US 4984894 A
- US 4645349 A
- US 4555767 A
- US 5980078 A
- US 5726912 A
- US 5689415 A
- US 5579218 A
- US 5351200 A
- US 4916600 A
- US 4646223 A
- US 4344127 A
- US 4396976 A
- US 5872892 A
- US 4979093 A
- US 4835710 A
- US 4417845 A
- US 4352620 A
- US 4068156 A